# EUROPÄISCHE PATENTANMELDUNG

(11) **EP 4 574 711 A1**
(43) Veröffentlichungstag der Anmeldung: **25.06.2025**
(21) Anmeldenummer: 24220786.8
(22) Anmeldetag: 17.12.2024
(51) Int. Cl.: B65G 1/00, B65G 60/00, B65G 61/00, B65G 65/00

(54) **BE- UND ENTLADESTATION ZUM ENTNEHMEN ODER EINFÜGEN VON BEHÄLTEREINHEITEN AUS MEHRFACH ZU TÜRMEN AUFEINANDERGESTAPELTEN FREI STAPELBAREN BEHÄLTEREINHEITEN**

(30) Priorität: 22.12.2023 DE 102023136582
(71) Anmelder: Dematic GmbH, 63150 Heusenstamm (DE)
(72) Erfinder: HOWEY, Ansgar, 22926 Ahrensburg (DE); KRUMBHOLZ, Peter, 63869 Heigenbrücken (DE)
(74) Vertreter: Moser Götze & Partner Patentanwälte mbB

(57) **Zusammenfassung**

Be- und Entladestation zum Entnehmen oder Einfügen von Behältereinheiten aus mehrfach zu Türmen aufeinandergestapelten frei stapelbaren Behältereinheiten, die ausgestaltet ist, um gezielt Behältereinheiten aus dem Behältereinheitenstapel bzw. Turm zu entnehmen oder in den Behältereinheitenstapel bzw. Turm einzufügen, wobei die Be- und Entladestation ein vertikales Gestell aufweist, an dem ein erstes vertikal verfahrbares Lastaufnahmemittel angeordnet ist, das eingerichtet ist, einen Teil-Turm oberhalb einer Ziel- Behältereinheit anzuheben, und an dem ein zweites vertikal verfahrbares Lastaufnahmemittel angeordnet ist, das eingerichtet ist, die Ziel-Behältereinheit von der Oberseite des verbleibenden Teil-Turms zu entnehmen oder an der Oberseite des verbleibenden Teil-Turms abzulegen, und an dem ein drittes vertikal verfahrbares Lastaufnahmemittel angeordnet ist, das eingerichtet ist, um sich unterhalb der Ziel-Behältereinheit am verbleibenden Turm bzw. Behältereinheitenstapel abzustützen.

## Beschreibung

Die Erfindung betrifft eine Be- und Entladestation zum Entnehmen oder Einfügen von Behältereinheiten aus mehrfach zu Türmen aufeinandergestapelten frei stapelbaren Behältereinheiten nach Anspruch 1 und ein entsprechendes Verfahren nach Anspruch 11.

Es ist bekannt, Warenlager zur Lagerung von Artikeln z. B. zur Verwendung bei der Auftragsabarbeitung zu verwenden. Meist unterscheidet man dabei zwischen Hochregallagern und automatischen Kleinteilelagern oder Fachbodenregallagern, die beide gemeinsam haben, dass sie fest installierte und somit vorgegebene Strukturen umfassen. Somit muss zu deren Auslegung bekannt sein, wie der maximale Bedarf an Lagerfläche, Durchsatz etc. sein wird und wie sich dieser im Laufe des Betriebs verändert, um eine optimierte Auslegung bei der Konstruktion zu berücksichtigen, da diese nicht ohne Weiteres später veränderbar ist.

Daneben sind auch Lager mit mobilen Regalen z. B. von der Firma Kiva bekannt. So beschreibt z. B. EP 1 590 272 A2 ein System für eine Lager- bzw. Vorratsverwaltung in einem Warenhaus, umfassend eine oder mehrere mobile Antriebseinheiten und eine Mehrzahl von bewegbaren Lagermagazinen, wobei jedes bewegbare Lagermagazin als regalartige Konstruktion Artikel enthält und für eine Anbringung über einen Ankopplungsmechanismus an die mobilen Antriebseinheiten gestaltet ist, wobei die mobile Antriebseinheit an ein bewegbares Lagermagazin ankoppelt und diese anhebt, um das bewegbare Lagermagazin auf die Befehlssignale hin durch das Warenhaus zu Kommissionierstationen zu transportieren, wo direkt aus den Lagermagazinen kommissioniert wird.

Ein solches System ist zwar schnell in einem Warenlager zu implementieren und gut skalierbar, um die Leistung im Bedarfsfall zu erhöhen.

Allerdings ist die Raumausnutzung schlecht und die mobilen Lagermagazine sind ergonomisch unvorteilhaft, da die in den Lagermagazinen enthaltenen Artikel auf unterschiedlichsten Ebenen/Höhen angeordnet sind und der Kommissionierer sich bücken und/oder strecken oder sogar eine Leiter nutzen muss, um alle Artikel zu erreichen. Zusätzlich ist das Auffüllen der Lagermagazine aufwendig.

Auch ist aus der WO 2015/074755 A2 bekannt, Behälter als Stapel auf dem Boden zu lagern, wobei es nötig wird, einzelne Behälter aus einem Behälterstapel mittels eines Stapel-Bedienfahrzeugs zu entnehmen. Es werden also Behälter in Stapeln gelagert und einzeln und auch gruppiert als Stapel gehandhabt. Das Fahrzeug zur Entnahme weist ein vertikales Gestell auf, an dem ein erstes vertikal verfahrbares Lastaufnahmemittel angeordnet ist, das eingerichtet ist, um einen Teil-Turm oberhalb einer Ziel-Behältereinheit anzuheben, und an dem ein zweites vertikal verfahrbares Lastaufnahmemittel angeordnet ist, das eingerichtet ist, um die Ziel-Behältereinheit von der Oberseite des verbleibenden Teil-Turms zu entnehmen oder an der Oberseite des verbleibenden Teil-Turms abzulegen. Da hierbei die Lastaufnahmemittel seitlich aus dem Fahrzeug ragen, um die Behälter zu ergreifen, entsteht ein Kippmoment.

Dieses kann einerseits zum Kippen des Fahrzeugs und andererseits zum Kippen der Behälterstapel führen. Daher ist es notwendig, einen Kippmomentausgleich vorzusehen. In einer alternativen Ausführungsform der WO 2015/074755 A2 heben die Lastaufnahmemittel die Behälter nicht von der Seite her, sondern von oben aus an, so dass das Kippmoment geringer oder nicht vorhanden ist. Allerdings muss das Fahrzeug dazu entweder eine gesonderte brückenartige Abstützung aufweisen oder nach Art eines Portalhubwagens ausgestaltet sein und die Behälterstapel überspannen. Beide Alternativen benötigen zusätzlichen Raum und Abstand zwischen den Behälterstapeln.

Demgegenüber besteht die Aufgabe der vorliegenden Erfindung darin, eine Möglichkeit zu schaffen, einzelne Behälter aus einem Behälterstapel bereitzustellen bzw. in einen Behälterstapel einzulagern, die das Problem des Kippmoments ohne größeren Platzbedarf löst.

Diese Aufgabe wird durch die in Anspruch 1 wiedergegebene Be- und Entladestation bzw. dem in Anspruch 11 angegebenen Verfahren gelöst. Vorteilhafte Ausgestaltungen ergeben sich aus den Unteransprüchen und der Beschreibung.

Erfindungsgemäß ist erkannt worden, dass, wenn die Be- und Entladestation an dem vertikalen Gestell ein drittes vertikal verfahrbares Lastaufnahmemittel aufweist, das eingerichtet ist, um sich unterhalb der Ziel-Behältereinheit am verbleibenden Turm bzw. Behältereinheitenstapel abzustützen, das Auftreten von Kippmomenten verhindert oder zumindest so stark reduziert werden kann, dass es ohne Weiteres beherrschbar ist. Mit anderen Worten, die dritte zusätzliche Lastaufnahmevorrichtung stützt sich an dem Behältereinheitenstapel unterhalb der Zielbehältereinheit ab, wodurch auftretende Kippmomente abgefangen werden.

Es wird also - im Gegensatz zur WO 2015/074755 A2 - keine Kippmomenten-Stabilisation benötigt trotz geringem Bauraum und seitlichem Zugriff.

Vom Ablauf her wird zum Entnehmen oder Einfügen von Behältereinheiten in zu Türmen aufeinandergestapelten frei stapelbaren Behältereinheiten der Teil-Turm oberhalb der Ziel-Behältereinheit angehoben und sich dabei unterhalb der Ziel-Behältereinheit am Turm abgestützt, um die Ziel-Behältereinheit freizugeben und diese zu entnehmen oder diese einfügen zu können. In einer Variante stützt sich das dritte Lastaufnahmemittel unterhalb der Ziel-Behältereinheit früher oder zumindest gleichzeitig ab, während das erste Lastaufnahmemittel den Teil-Turm oberhalb der Ziel-Behältereinheit anhebt. Es ergibt sich daher quasi ein spreizendes Auseinanderziehen des Stapels bzw. Turms um die Ziel-Behältereinheit herum.

In einer bevorzugten Ausführungsform, greift das erste Lastaufnahmemittel an einer Behältereinheit im Teil-Turm oberhalb der Ziel-Behältereinheit an und das dritte vertikal verfahrbare Lastaufnahmemittel stützt sich an einer Behältereinheit unterhalb der Ziel-Behältereinheit im verbleibenden Turm ab. Es wird sich somit vorzugsweise an den einzelnen Behältereinheiten selbst abgestützt bzw. an diese angegriffen zur Handhabung.

Dazu können sich das erste und/oder dritte vertikal verfahrbare Lastaufnahmemittel am Rand und/oder an seitlichen Vorsprüngen der jeweiligen Behältereinheit angreifen bzw. abstützen. Auch ein Abstützen oder Angreifen an Aussparungen bzw. Löchern etc. ist möglich.

Hierzu kann z. B. der verbreiterte Rand einer Behältereinheit oder seitliche Vorsprünge (an den äußeren Seitenwänden) einer Behältereinheit dienen.

Die Be- und Entladestation kann eine Aufnahme für einen Turm bzw. Behältereinheitenstapel aufweisen, so dass der Stapel in der Station ggf. teilweise stabilisierend umgeben ist.

Die Be- und Entladestation(en) dient/dienen somit zum Aufbau der Türme aus gestapelten Behältereinheiten sowie für den Zugriff auf die einzelnen Behältereinheiten im Turm.

Eine Be- und Entladestation kann mobil oder fest installiert sein. Die fest installierte Variante muss nur mit Strom- und Datenleitungen an das System angebunden werden. Die mobile Variante muss einen Energiespeicher wie eine Batterie beinhalten und mittels Funktechnologien, wie WIFI oder 5G an das System angebunden sein. Die Be- und Entladestation könnte demnach ein Fahrwerk aufweisen. Die mobile Variante kann z. B. als ein Flurförderfahrzeug ausgestaltet sein, das die benötigte Stabilität wie auch bereits eine Hubeinrichtung aufweist. Dabei könnten sowohl Gegengewichtsstapler genutzt werden, wie auch ein Fahrzeug, dessen Radarme den Turm umfassen und den Turm damit innerhalb der Radbasis aufnehmen.

Die Be- und Entladestation dient nicht nur zum Entfernen von Behältereinheiten aus einem Turm oder umgekehrt dem Einfügen, sondern kann auch eine fördertechnische Schnittstelle an weitere Bereiche bereitstellen, indem sie den Abtransport und/oder Antransport von Behältereinheiten über Fördertechnik ermöglicht. In einem einfachen Fall kann sie über eine zu- und abführende Rollenbahn auf Bodenniveau angeschlossen sein, die z. B. zu einer Kommissionierstation in einen Kommissionierbereich führt. Auch die Verwendung mit AGV, AMR oder FTS im Allgemeinen ist denkbar, um die Station zu ver- und entsorgen.

Das erste Lastaufnahmemittel kann z. B. ausfahrbare Teleskoparme aufweisen, die an die entsprechende Behältereinheit seitlich angreifen und so beim vertikalen Verfahren den Teil-Turm oberhalb gemeinsam mit der Behältereinheit anheben. Somit wird die Ziel-Behältereinheit darunter frei und kann gehandhabt werden.

Dazu weist die Be- und Entladestation eine zweites vertikal verfahrbares Lastaufnahmemittel auf, das eingerichtet ist, eine Behältereinheit von der Oberseite eines Teil-Turms zu entnehmen oder an der Oberseite eines (Teil-)Turms abzulegen. Auch hierzu können z. B. ausfahrbare Teleskoparme vorgesehen sein. Insbesondere kann das zweite vertikal verfahrbares Lastaufnahmemittel horizontal aus- und einfahrbare Teleskopschienen mit Behältereinheitgreifmitteln aufweisen. Diese müssen jedoch nur die Last einer Behältereinheit tragen können und sind demgemäß schwächer auslegbar als das erste Lastaufnahmemittel. Auch denkbar ist es, dass die zweiten Lastaufnahmemittel am ersten Lastaufnahmemittel angeordnet und relativ zu diesem beweglich sind.

Die dritte zusätzliche Lastaufnahmevorrichtung ist derart ausgelegt, dass sie die beim Abstützen auftretenden Kräfte aufnehmen und weitergeben kann. Auch sie kann z. B. ausfahrbare Teleskoparme aufweisen, die an die entsprechende Behältereinheit abstützend ankoppeln. Die Enden der Teleskoparme können entsprechende Greifmittel oder Abstützmittel zur Interaktion mit den Behältereinheiten aufweisen.

Das vertikale Gestell besitzt somit sinnvollerweise eine Höhe, die etwas höher als die geplante maximale Turmhöhe ist.

Die z. B. aus dem Turm abgenommene Behältereinheit kann auch an eine Transporteinheit übergeben werden.

Denkbar ist es auch, das Entnehmen einer Behältereinheit mit dem Einfügen einer anderen Behältereinheit zu verknüpfen, also ein Doppelspiel zu erzeugen, wenn am zweiten Lastaufnahmemittel z. B. zwei seitlich verfahrbare Aushubschlitten angeordnet sind.

Als Kippmoment wird vorliegend das am Turm bzw. Behältereinheitenstapel auftretende seitliche Moment bzw. Summe aller Momente angesehen, die bei Überschreiten den Behältereinheitenstapel umkippen würden. Dabei wird als Kippachse einer der seitlichen Ränder des Bodens der untersten Behältereinheit im entsprechenden Stapel angesehen.

Die erfindungsgemäße Be- und Entladestation eignet sich besonders zum Einsatz in einem Warenlagersystem mit einem Lagerbereich bestehend aus auf Aufstellflächen frei stapelbaren Behältereinheiten, die mehrfach zu Türmen aufeinandergestapelt sind. Die Türme können auf einem Hallenboden oder auf beweglichen Ständern stehen. Zum Transport der Türme bzw. Behältereinheiten dienen automatisierte, vorzugsweise autonome, Transporteinheiten, wobei jede Transporteinheit als flurgebundenes Fördermittel mit eigenem Fahrantrieb ausgestaltet ist und automatisch gesteuert und berührungslos geführt wird. Die beweglichen Ständer können als von der Transporteinheit unterfahrbar ausgestaltet sein und die Transporteinheit kann so ausgestaltet sein, einen Ständer samt Turm von unten zum Transport anzuheben. Ein solches Warenlagersystem zeichnet sich durch Variabilität und Skalierbarkeit aus.

Insbesondere können so die drei wesentlichen Nachteile der bekannten Systeme behoben werden, die da wären i) niedrige Raumausnutzung aufgrund der geringen Höhe der mobilen Lagermagazine bzw. Regale; ii) schlechte Ergonomie, da der Kommissionierer sich bücken oder strecken muss (Artikel können in Höhen zwischen 40 cm und 2 m in den Lagermagazinfächern gelagert sein); iii) aufwendiges und somit kostenintensives Wiederauffüllen der Lagermagazine.

Es wird nur eine freie Aufstellfläche (leere Halle, Bühne, etc.) benötigt, in die die frei stapelbaren Behältereinheiten zu Türmen auf Ständern gestapelt hineingestellt werden und auf deren Boden die Be- und Entladestation(en) angeordnet werden sowie Transporteinheiten autonom zwischen den Türmen und den Be- und Entladestation(en) sowie ggf. z. B. Kommissionierstationen fahren können.

Die Be- und Entladestation kann so ausgestaltet sein, dass die Türme beim Einfahren in die Station zentriert und stabilisiert werden. So können geeignete trichterförmig angeordnete Leitbleche vorgesehen sein.

Die Kapazität und Leistung kann durch Hinzufügen bzw. Erhöhen der Zahl dieser Komponenten in einfacherweise gesteigert bzw. dem Bedarf angepasst werden, ohne dass es nötig wäre, eine festinstallierte Infrastruktur aufwendig umzubauen oder zu ergänzen.

Vorliegend wird in den freistapelbaren Behältereinheiten gelagert und auf den mobilen Ständern der gesamte Stapel der Behältereinheiten bzw. Turm transportiert. Dies erlaubt es einerseits, sehr viel höhere Türme auszubilden (durch ein hohes Stapeln). Andererseits können die Behältereinheiten an beliebiger Stelle auf der Aufstellfläche bzw. im Warenlager (die auch ggf. wechseln kann) zum Stapel zusammengesetzt werden. Die einzelnen Behältereinheiten werden von den Be- und Entladestation(en) bereitgestellt und können in bekannter Weise an Kommissionierstationen verwendet bzw. präsentiert werden.

Insbesondere erlauben die stapelbaren Behältereinheiten die Bildung dynamisch veränderbarer Lagerstrukturen, so dass die Änderung der Lagerstrukturen im laufenden Betrieb durch Umsetzen, Ergänzen, Umorganisieren etc. der Behältereinheiten bzw. deren Stapel möglich ist.

Vorzugsweise weisen die stapelbaren Behältereinheiten ein gleichbleibendes Höhenraster auf und sind turmartig als Stapel nebeneinander angeordnet und zu variablen Lagerstrukturen mit Gassen frei gestapelt.

Wenn die stapelbaren Behältereinheiten ausgestaltet sind, um beim Aufeinanderstapeln horizontal zueinander fixiert zu werden, sie also verschachtelt bzw. im Englischen "nested" sind, kann deren Lagerung und insbesondere Transport ohne ein Verrutschen zueinander ausgeführt werden. Sie können sich also nicht gegeneinander verschieben. Eine einfache Ausgestaltung würde z. B. das geringfügige Eintauchen einer oberen Behältereinheit mit ihrer Unterseite in die Öffnung einer unteren Behältereinheit umfassen.

Die einzelnen Behältereinheiten sind dabei statisch so ausgelegt, dass sie das Gewicht eines kompletten Stapels tragen können.

Als Behältereinheit kommen insbesondere stapelbare Kisten oder Container in Frage.

Grundsätzlich ist die Höhe des Turms der gestapelten Behältereinheiten beliebig. Vorzugsweise weisen die Türme Höhen von bis zu 3m, vorzugsweise 5m, insbesondere 6 - 8m auf. Somit kann in üblichen Hallen die Raumhöhe ausgenutzt werden.

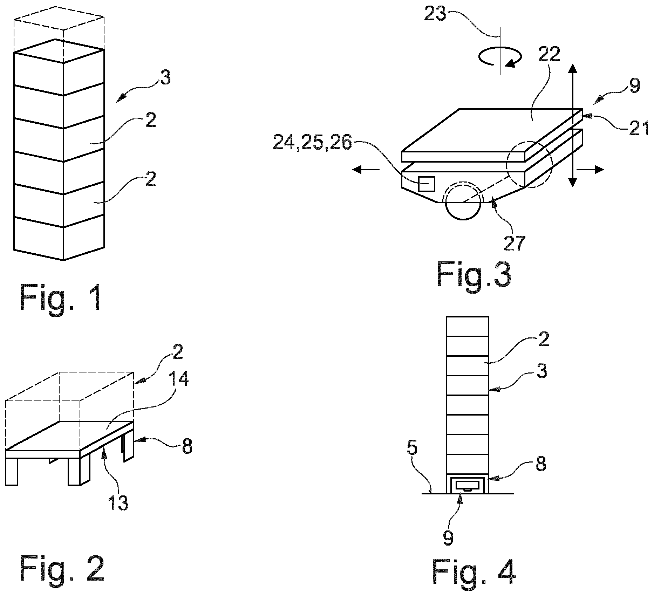

Weitere Details der Erfindung ergeben sich aus der nachfolgenden Beschreibung von Ausführungsbeispielen anhand der Zeichnung, in der
- Fig. 1: eine schematische perspektivische Ansicht auf frei stapelbare Behältereinheiten, die mehrfach zu einem Turm aufeinandergestapelt sind;
- Fig. 2: eine schematische perspektivische Ansicht eines beweglichen Ständers;
- Fig. 3: eine schematische perspektivische Ansicht einer Transporteinheit;
- Fig. 4: eine Seitenansicht auf einen Turm aus Figur 1, der auf einem Ständer aus Figur 2 steht, unter dem eine Transporteinheit aus Figur 3 angeordnet ist;

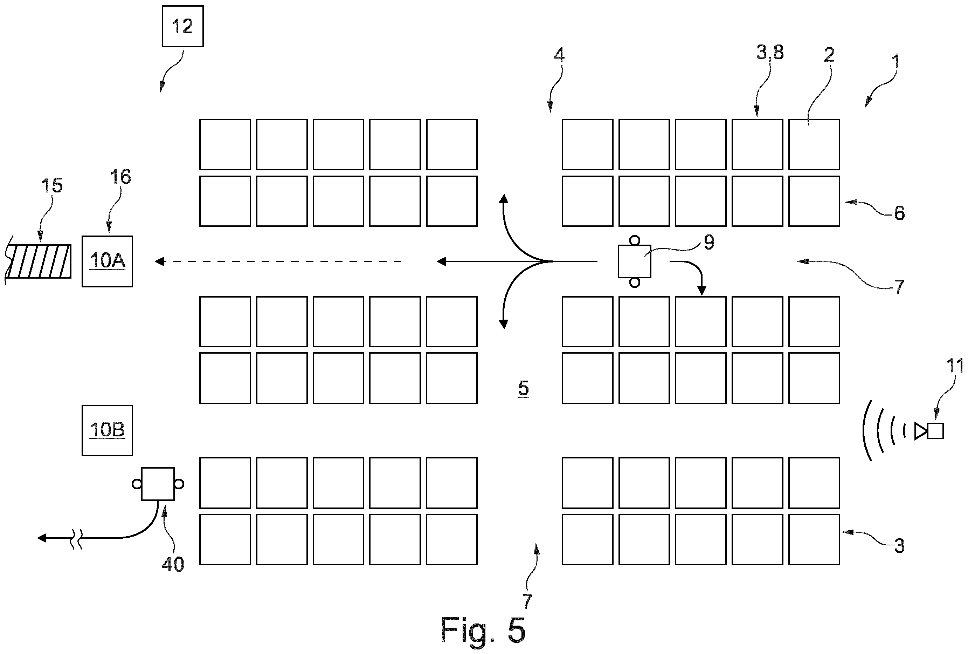

- Fig. 5: eine schematische Draufsicht auf ein Warenlagersystem nach der Erfindung;
- Fig. 6 - 8: schematische Seitenansichten auf eine Be- und Entladestation aus Figur 5;
zeigen.

In den Figuren ist ein als Ganzes mit 1 bezeichnetes Warenlagersystem dargestellt. Das System umfasst im Wesentlichen vier Komponenten:
- frei stapelbare Behältereinheiten 2, die mehrfach zu Türmen 3 aufeinandergestapelt sind, die in einem Lagerbereich 4 bestehend aus Aufstellflächen 5 (Boden) in Reihen 6 mit Gassen 7 stehen;
- mehrere bewegliche Ständer 8, auf denen jeweils ein Turm 3 steht;
- mehrere automatisierte autonome Transporteinheiten 9 zur Bewegung der Türme 3, wobei die Transporteinheit 9 als flurgebundenes Fördermittel ausgestaltet ist und automatisch gesteuert und berührungslos geführt wird und wobei die beweglichen Ständer 8 von der Transporteinheit 9 unterfahren werden und die Transporteinheit 9 ausgestaltet ist, einen Ständer 8 samt Turm 3 von unten zum Transport anzuheben;
- mindestens einer Be- und Entladestation 10, die ausgestaltet ist, um gezielt Behältereinheiten 2 aus einem Behältereinheitenstapel bzw. Turm 3 zu entnehmen oder in einen Behältereinheitenstapel bzw. Turm 3 einzufügen.

Die frei stapelbaren Behältereinheiten 2 sind vorliegend als Kisten ausgestaltet, die ineinander eingreifen, um beim Aufeinanderstapeln horizontal zueinander fixiert zu werden.

So können die Kisten 2 frei aufeinandergestapelt werden und erlauben demnach die Bildung dynamisch veränderbarer Lagerstrukturen, z. B. der oben erwähnten Reihen 6 und Gassen 7 auf dem Boden 5.

Dabei kann der Abstand der Türme 3 bzw. Ständer 8 zueinander minimiert werden, um die Fläche optimal zu nutzen.

Die Kisten 2 können zu Türmen mit Höhen von bis zu 3m, vorzugsweise 5m, insbesondere 6 - 8m gestapelt werden. Die Höhe kann an die Höhe der Halle bzw. der Deckenhöhe angepasst werden.

Sowohl die beweglichen Ständer 8 als auch die Kisten 2 sind codiert, so dass die Transporteinheiten 9 bzw. weitere Sensorik 11 eine Identifizierung und Nachverfolgung im System durch eine zentrale übergeordnete Steuerung 12 erlauben.

Die Codierung der Ständer 8 ist dazu an der Unterseite 13 der Plattform 14 angebracht, so dass diese einfach von einer unterfahrenden Transporteinheit 9 ausgelesen werden kann.

Die Transporteinheiten 9 sind als flurgebundene Fördermittel mit einem eigenen Fahrantrieb ausgestaltet und automatisch gesteuert und werden berührungslos geführt. Dies erfolgt u. a. durch drahtlose Kommunikation bzw. Interaktion mit der zentralen übergeordneten Steuerung 12.

Die Transporteinheiten 9 verfügen über eine Hebeeinrichtung 21 und können die Ständer 8 samt der darauf befindlichen Kiste 2 bzw. dem darauf befindlichen Turm 3 damit anheben und anschließend verfahren. Dazu kann die Hubplattform 22 mittels der Hebeeinrichtung 21 nach dem Unterfahren des Ständers 8 angehoben werden. Die Hebeeinrichtung 21 umfasst einen Scherenmechanismus zum Ausführen des Hubs und gleichzeitiger Stabilisierung der Hubplattform 22.

Vorliegend weisen die Transporteinheiten 9 eine angetriebene Mittelachse 27 (mittig angeordnete Antriebsachse) auf, die sowohl eine geradlinige Bewegung der Transporteinheiten 9 wie auch die Rotation um die Hochachse 23 gestattet.

Das Verfahren des Ständers 8 mit dem Turm 3 erfolgt auf kurzen Strecken mit sehr geringen Anfahr- und Bremsbeschleunigungen, damit der Stapel bzw. Turm oberhalb des Ständers 8 nicht umkippt. Dieses langsame Verfahren macht bei kleinen Strecken Sinn, z. B. beim Versetzen um einen Stellplatz in der Reihe 6 etc.

Für längere Strecken, wenn der Ständer 8 samt Turm 3 schneller verfahren werden muss, wird durch die Vorwahl geeigneter Trajektorien mit zusätzlicher überlagerter stabilisierender Regelung des Antriebs der Turm 3 auf dem Ständer 8 stabil gehalten.

Dazu sind die Transporteinheiten 9 jeweils mit einem dynamischen Balancierungsmodul 24 und einer Stabilisierungssteuerung 25 ausgestaltet.

Aus dem Warehouse Managementsystem der übergeordneten Steuerung 12 werden die Informationen über die Inhalte in den gestapelten Kisten 2 dazu verwendet werden, den Schwerpunkt eines Turms 3 (vertikal über dem Boden) zu ermitteln und als Ausgangsgröße für die vorzuwählende Trajektorie zu nutzen.

Damit kann abhängig von dem geplanten Beschleunigungsverlauf und dem Schwerpunkt des Turms 3 die Transporteinheit 9 dynamisch so angekippt werden, dass der Turm 3 stabil verfahren wird.

Mit geeigneter Sensorik 26 wird der Kippwinkel des Turms 3 während des Verfahrens ständig erfasst und bei nicht vorhergesehenen Änderungen des Winkels (Abweichungen vom Sollwinkel) justiert die Regelung in der Stabilisierungssteuerung 25 den Ankippwinkel der Transporteinheit nach durch Beschleunigung oder Bremsen der Einheit, so dass ein stabiler Fahrzustand erreicht wird.

Die Transporteinheiten 9 verfügen zudem über transportfahrzeugübliche Teilsysteme bzw. Module (nicht gezeigt):
- ein Energiesystem, z. B. Li-lon-Batterie mit Ladesystemen und Überwachung;
- ein Fahrantriebssystem mit Rädern, Getriebe, Antriebsmotor, Umrichter, Antriebsregelungselektronik, Drehzahlsensoren, ggf. Strom-/Spannungssensoren, ggf. Temperatursensoren für die Elektronik und/oder das Energiesystem;
- eine Steuerungseinheit zur Auftragsabarbeitung durch geeignete Ansteuerung der Teilsysteme wie auch zur Eigendiagnose;
- ein Kommunikationssystem zum Austausch von Informationen wie Aufträge, Abarbeitungsstatus, Diagnosestatus, Ladezustand usw. mit der zentralen Steuerung 12;
- ein Navigationssystem, um sich im Lager zu orientieren und die eigene Position zu bestimmen.

Der Aufbau der Kistenstapel bzw. der Zugriff auf einzelne Kisten findet an den Be- und Entladestationen 10 statt.

Diese bestehen jeweils aus einem Gestell 16, das etwas höher ist als die maximale Höhe der Kistenstapel bzw. des Turms 3. An der Vorderseite des Gestells 16 ist ein Hubschlitten 17 montiert, der vertikal verfahren werden kann und die für einen KistenStapel maximal vorgesehene Last anheben kann. Am Hubschlitten 17 befinden sich zwei ausfahrbare Greifarme 18, die ebenfalls auf diese Last ausgelegt sind.

Unterhalb der Greifarme 18 ist der Hubschlitten mit dem Aushubschlitten 19 ausgestattet, der relativ zum Hubschlitten 17 vertikal verfahren werden kann. Der Aushubschlitten 19 ist so dimensioniert, dass er das Gewicht von einer Kiste 2 heben kann. Am Aushubschlitten 19 befinden sich ebenfalls ausfahrbare Greifarme 20, ausgelegt auf das Gewicht einer Kiste 2.

Zusätzlich ist unterhalb des Aushubschlittens 19 ein ebenfalls mit einem Hubschlitten 29 am Gestell 16 vertikal verfahrbares Lastabstützmittel 28 mit Teleskoparmen 30 vorgesehen, das relativ zum Hubschlitten 17 bzw. vertikal zum Aushubschlitten 19 verfahren werden kann, um sich unterhalb der Ziel-Kiste mit den Teleskoparmen 30 an einer Kiste 2 abzustützen.

Der Zugriff auf eine einzelne Kiste läuft wie folgt ab:
Eine Transporteinheit 9 fährt anhand eines von der zentralen übergeordneten Steuerung 12 erhaltenen Auftrags durch die Gassen 7 zu einer Reihe 6 und dort zu einem bestimmten Turm 3 bzw. dessen Ständer 8. Dann navigiert die Transporteinheit 9 unter den Ständer 8 und hebt diesen mittels der Hubplattform 22 und der Hebeeinrichtung 21 zusammen mit dem darauf stehenden Turm 3 an. Anschließend fährt die Transporteinheit 9 unter Einfluss des dynamischen Balancierungsmoduls 24 und der Stabilisierungssteuerung 25 zur Be- und Entladestation 10.

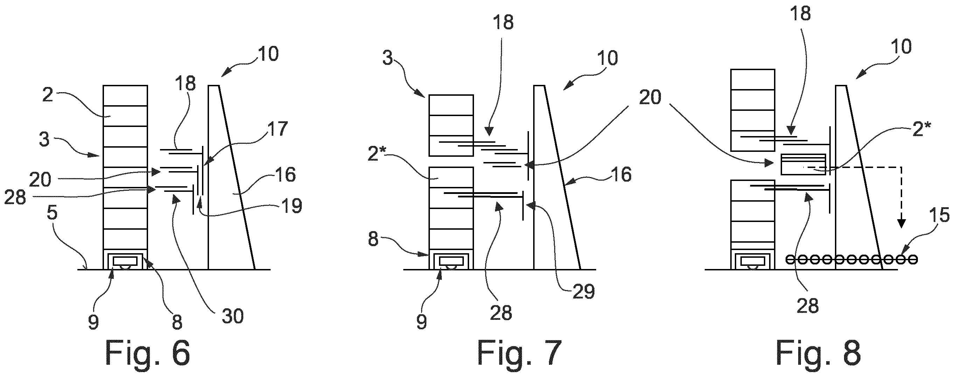

Nach dem exakten Positionieren eines Turms 3 vor der Be- und Entladestation 10 wird dessen Hubschlitten 17 so weit hochgefahren, dass die Greifarme 18 in den Stapel ausgefahren werden können, unterhalb der Greifpunkte der Kiste 2, die sich direkt oberhalb der Zielkiste 2* befindet (Figur 6).

Nach Ausfahren der Greifarme wird der Hubschlitten angehoben, die Greifarme heben die Kiste am Rand und den darüber befindlichen Stapel an den Greifpunkten der Kiste an. Diese Greifpunkte können z. B. als umlaufender Kragen an der Außenkontur der Kiste 2 ausgebildet sein. Es wird so weit angehoben, dass die sich darunter befindliche Zielkiste 2* ebenfalls ausgehoben und aus dem Stapel bzw. Turm herausgeführt werden kann (Figur 7).

Gleichzeitig oder vorher wird das vertikal verfahrbare Lastabstützmittel 28 mit seinen Teleskoparmen 30 so positioniert, dass es sich an der Kiste direkt unterhalb der Ziel-Kiste 2* an dessen Rand momentübertragend abstützen kann, wozu es mittels seines Hubschlittens 29 entsprechend am Gestell 16 vertikal verfahren und temporär fixiert wird.

Im nächsten Schritt wird der Aushubschlitten 19 relativ zum Hubschlitten 17 verfahren, so dass die Greifarme 20 des Aushubschlittens 19 unterhalb der Greifpunkte der Zielkiste 2* ausgefahren werden können. Die Greifarme 20 werden ausgefahren und durch Verfahren des Aushubschlittens 19 relativ zum Hubschlitten 17 wird die Zielkiste 2* aus dem Turm 3 gehoben.

Im nächsten Schritt (Fig. 8) wird die Zielkiste 2* aus dem Turm 3 herausgezogen durch Einfahren der Greifarme 20 des Aushubschlittens 19 und Zurückziehen der Greifarme 20 samt gegriffener Kiste 2*. Anschließend wird der Hubschlitten 17 abgesenkt und der obere Teil des Kisten-Stapels wird auf den unteren Teil des Turms 3 abgesenkt. Durch Führungen in den Kisten 2 wird sichergestellt, dass die Kisten 2 formschlüssig ineinandergreifen (von Unterseite und Oberseite).

Während dieser Operationen stabilisiert das Lastabstützmittel 28 ständig den Stapel bzw. die Station durch Abstützung an der Kiste unterhalb der Zielkiste 2*.

Nach Einfahren der Greifarme 18 des Hubschlittens 17 wird der Aushubschlitten 19 abgesenkt und die Kiste 2* abgesetzt, z. B. auf einer am Fuß der Übergabestation angeordneten Rollenbahn 15 (vgl. gestrichelter Pfeil in Figur 8). Alternativ kann die Kiste auch auf einem FTS abgesetzt werden für den Weitertransport an eine nachgelagerte Bearbeitungsstation. Denkbar ist auch, die Ziel-Kiste 2* im Gestell 16 aufzunehmen und von dort aus an eine Fördertechnik weiter zu transportieren.

Die Greifarme 20 werden von der Zielkiste 2* weggefahren, z. B. seitlich, so dass die Kiste freisteht und weiterbewegt werden kann.

Das Einfügen einer Kiste 2 in einen Turm 3 erfolgt analog zur Entnahme einer Kiste 2 aus einem Turm, wie zuvor beschrieben.

Eine Kiste 2 wird z. B. auf der Rollenbahn 15 bereitgestellt. Die Greifarme 20 des Aushubschlittens 19 werden unterhalb der Greifpunkte der Kiste 2 angesetzt. Nach Anfahren der gewünschten Höhe von dem Hubschlitten 17 samt Aushubschlitten 19 und Kiste 2 werden die Greifarme 18 des Hubschlittens ausgefahren und der obere Teil des Kistenstapels (Turms) wird so weit mit der Hubschlittenbewegung ausgehoben, dass die Kiste 2 durch Ausfahren der Greifarme 20 des Aushubschlittens 19 in den Stapel bzw. Turm 3 eingefügt werden kann.

Auch hierbei wurden zunächst die Teleskoparme 30 des Lastabstützmittels 28 an die Kiste unterhalb der Zielposition positioniert und dort an der Kiste abgestützt.

Nach Absetzen der Kiste 2 sowie des oberen Stapels steht die Station 10 für einen neuen Auftrag zur Verfügung.

Die Be- und Entladestation 10A ist ortsfest und entsprechend an eine Fördertechnik 15 angeschlossen, die in weitere Bereiche des Warenlagersystems führt, wohingegen die Be- und Entladestation 10B durch gesonderte AMR 40 ver- und entsorgt wird, die eine sehr variable Routenführung und somit Weiterbehandlung erlauben.

Die übergeordnete Steuerung 12 übernimmt nicht nur Funktionen eines WMS (vgl. https://de.wikipedia.org/wiki/Lagerverwaltungssystem), nämlich insbesondere Nachhalten aller Produkte und deren Lage sowie Steuerung und Verwaltung der Abläufe und Auftragserfüllung im Lager, sondern auch die Steuerung der Lage der mobilen Transporteinheiten 9 sowie der nicht fixen Be- und Entladestationen 10 sowie der Bereitstellung der Informationen über die Artikel in den Kisten 2 zur Schwerpunktbestimmung usw.

## Patentansprüche

1. Be- und Entladestation zum Entnehmen oder Einfügen von Behältereinheiten aus mehrfach zu Türmen aufeinandergestapelten frei stapelbaren Behältereinheiten, die ausgestaltet ist, um gezielt Behältereinheiten aus dem Behältereinheitenstapel bzw. Turm zu entnehmen oder in den Behältereinheitenstapel bzw. Turm einzufügen, wobei die Be- und Entladestation ein vertikales Gestell aufweist, an dem ein erstes vertikal verfahrbares Lastaufnahmemittel angeordnet ist, das eingerichtet ist, um einen Teil-Turm oberhalb einer Ziel- Behältereinheit anzuheben, und an dem ein zweites vertikal verfahrbares Lastaufnahmemittel angeordnet ist, das eingerichtet ist, um die Ziel-Behältereinheit von der Oberseite des verbleibenden Teil-Turms zu entnehmen oder an der Oberseite des verbleibenden Teil-Turms abzulegen, **dadurch gekennzeichnet, dass** an dem Gestell ein drittes vertikal verfahrbares Lastaufnahmemittel angeordnet ist, das eingerichtet ist, um sich unterhalb der Ziel-Behältereinheit am verbleibenden Turm bzw. Behältereinheitenstapel abzustützen.

2. Be- und Entladestation nach Anspruch 1, **dadurch gekennzeichnet, dass** das erste vertikal verfahrbare Lastaufnahmemittel an einer Behältereinheit im Teil-Turm oberhalb der Ziel- Behältereinheit angreift und das dritte vertikal verfahrbare Lastaufnahmemittel sich an einer Behältereinheit unterhalb der Ziel-Behältereinheit im verbleibenden Turm abstützt.

3. Be- und Entladestation nach Anspruch 2, **dadurch gekennzeichnet, dass** das erste und/oder dritte vertikal verfahrbare Lastaufnahmemittel sich am Rand und/oder an seitlichen Vorsprüngen der Behältereinheit angreift bzw. abstützt.

4. Be- und Entladestation nach Anspruch 2 oder 3, **dadurch gekennzeichnet, dass** das erste und/oder dritte vertikal verfahrbare Lastaufnahmemittel sich an Aussparungen einer Behältereinheit angreift bzw. abstützt.

5. Be- und Entladestation nach einem der vorhergehenden Ansprüche, **dadurch gekennzeichnet, dass** die Be- und Entladestation eine Aufnahme für einen Turm bzw. Behältereinheitenstapel aufweist.

6. Be- und Entladestation nach einem der vorhergehenden Ansprüche, **dadurch gekennzeichnet, dass** die Be- und Entladestation ein Fahrwerk aufweist.

7. Be- und Entladestation nach einem der vorhergehenden Ansprüche, **dadurch gekennzeichnet, dass** das zweite vertikal verfahrbares Lastaufnahmemittel horizontal aus- und einfahrbare Teleskopschienen mit Behältereinheitgreifmitteln aufweist.

8. Be- und Entladestation nach einem der vorhergehenden Ansprüche, **dadurch gekennzeichnet, dass** die Be- und Entladestation an eine Fördertechnik angeschlossen ist.

9. Be- und Entladestation nach Anspruch 7 und 8, **dadurch gekennzeichnet, dass** die Fördertechnik mit dem zweiten vertikal verfahrbaren Lastaufnahmemittel verbunden ist.

10. Be- und Entladestation nach einem der vorhergehenden Ansprüche, **dadurch gekennzeichnet, dass** in vertikaler Erstreckung des vertikalen Gestells das erste Lastaufnahmemittel oben, das dritte Lastaufnahmemittel unten und das zweite Lastaufnahmemittel zwischen dem ersten und dritten Lastaufnahmemittel angeordnet sind.

11. Verfahren zum Entnehmen oder Einfügen von Behältereinheiten in zu Türmen aufeinandergestapelten frei stapelbaren Behältereinheiten, vorzugsweise mittels einer Be- und Entladestation nach einem der vorhergehenden Ansprüche, wobei zur Entnahme oder zum Einfügen von Behältereinheiten, vorzugsweise einer einzelnen Behältereinheit, in einen Turm der Teil-Turm oberhalb der Ziel-Behältereinheit angehoben und dabei sich unterhalb der Zielbehältereinheit am Turm abgestützt wird, um die Ziel-Behältereinheit freizugeben und diese zu entnehmen oder diese einzufügen.
